# EUROPEAN PATENT SPECIFICATION

(11) **EP 2 545 977 B1**
(45) Date of publication and mention of the grant of the patent: **20.04.2016**
(21) Application number: 11173476.0
(22) Date of filing: 11.07.2011
(51) Int. Cl.: B01D 53/00, F25J 3/02, F23J 15/02

(54) **Heat integration for cryogenic CO2 separation**
Wärmeintegration für die kryogene CO2-Trennung
Intégration thermique pour la séparation cyogénique de CO2

(43) Date of publication of application: 16.01.2013
(73) Proprietor: ALSTOM Technology Ltd, 5400 Baden (CH)
(72) Inventor: Stallman, Olaf, 55270 Essenheim (DE)
(74) Representative: General Electric Technology GmbH

(56) References cited:
- EP-A1- 1 319 911
- EP-A1- 1 952 874
- US-A1- 2001 004 838
- US-A1- 2008 173 585
- US-A1- 2010 080 745

## Description

### Field of the invention

The present invention relates to a method and a system for separating CO₂ from a CO₂ rich flue gas stream by refrigeration of the flue gas stream to condense CO₂ present therein.

### Background

In the combustion of a fuel, such as coal, oil, peat, waste, etc., in a combustion plant, such as a power plant, a hot process gas is generated, such process gas containing, among other components, carbon dioxide CO₂. With increasing environmental demands various processes for removing carbon dioxide from the process gas have been developed.

CO₂ capture often comprises cooling, or compression and cooling, of the flue gas to condense CO₂ in liquid or solid form and separate it from non-condensable flue gas components, such as N₂ and O₂. Prior to CO₂ capture, it is generally necessary to clean the carbon dioxide rich flue gas. Gas cleaning operation may generally include removal of dust, sulfur compounds, metals, nitrogen oxides, etc.

Cooling of the flue gas to its condensation temperature may be achieved by various means, e.g. using a suitable external refrigerant. CO₂ capture systems using an external refrigerant can be expensive, both in terms of investment costs and in terms of operational costs. As an alternative, auto-refrigeration systems are often used, wherein the CO₂ rich flue gas is compressed, cooled and expanded to achieve condensation of the CO₂.

In these systems the liquid CO₂ product is used as a cooling medium for the CO₂ rich flue gas. Because of the tight temperature approaches and the simultaneous heat exchange between the condensing and several evaporating media in these systems, CO₂ condensation is generally done using brazed aluminum heat exchangers. Besides being expensive, aluminum is sensitive to fouling by many of the trace components contained in flue gases from fossil fuel combustion like mercury and particulate matter. Auto-refrigeration systems therefore generally require extensive efforts to remove harmful components in the flue gas upstream of the CO₂ condensation step, such as particle filters, mercury adsorbers and SOₓ/NOₓ scrubbers. Therefore there is a demand on systems and methods to make equipment available in the method for removal of carbon dioxide.

EP 1 319 911 A1 describes a system according to the precharacterizing part of claim 1.

### Summary of the invention

An object of the present invention is to provide a system and a method for removal of carbon dioxide from a flue gas stream, e.g. generated in a boiler combusting a fuel in the presence of a gas containing oxygen, the system and method alleviating at least one of the above mentioned problems.

The flue gas treatment systems and methods for removal of CO₂ from the flue gas stream according to various aspects described herein allow for cost effective separation of CO₂ using simple and robust heat exchanger designs and materials.

According to aspects illustrated herein, there is provided a refrigeration system for condensation of carbon dioxide (CO₂) in a flue gas stream, said system comprising
a flue gas compressor,
at least one flue gas adsorption drier,
a refrigeration system for condensation of carbon dioxide (CO₂), in a flue gas stream, said system comprising a refrigeration circuit containing a refrigerant, said refrigeration circuit comprising;
a multistage refrigerant compressor,
a refrigerant condenser,
a refrigerant chiller,
a flue gas chiller,
at least one condenser,
and
a stripper column allowing distillation;
wherein the flue gas chiller is arranged between the flue gas compressor and the flue gas adsorption drier and the the flue gas adsorption drier and the at least one condenser are arranged in series upstream of the stripper column.

According to some embodiments, the flue gas treatment system further comprises another condenser, the first condenser, being arranged in serie upstream of the condenser.

By arranging two or more condensers in serie, having gas/liquid separators placed in between, the efficiency of energy consumption may be optimised as the cooling may be performed step-wise, instead of in only one step.

According to the embodiments, the flue gas treatment system further comprising a heat exchanger configured to cool at least a portion of the condensed refrigerant using the CO₂ depleted flue gas from the second CO₂ condenser.

According to some embodiments, the flue gas treatment system further comprises
a first heat exchanger configured to cool at least a portion of the condensed refrigerant using the CO2 depleted flue gas from the stripper column,
a second heat exchanger configured to reheat the CO₂ depleted flue gas from the first refrigerant chiller using warm flue gas from the flue gas compressor,
a first flue gas expander configured to expand the reheated compressed CO₂ depleted flue gas from the first heat exchanger,
a third heat exchanger configured to further cool the condensed refrigerant from the first refrigerant chiller using the using the CO₂ depleted flue gas from the flue gas expander,
a fourth heat exchanger configured to reheat the CO₂ depleted flue gas from the second heat exchanger using warm flue gas from the flue gas compressor,
a second flue gas expander configured to expand the reheated compressed CO₂ depleted flue gas from the second heat exchanger, and
optionally, a fifth heat exchanger configured to reheat the CO₂ depleted flue gas from the third exchanger.

According to some embodiments, the flue gas treatment system further comprises
a first heat exchanger configured to cool at least a portion of the condensed refrigerant using the CO₂ depleted flue gas from the stripper column,
a second heat exchanger configured to reheat the CO₂ depleted flue gas from the first heat exchanger using warm flue gas from the flue gas compressor,
a first flue gas expander configured to expand the reheated compressed CO₂ depleted flue gas from the second heat exchanger,
a third heat exchanger configured to further cool the condensed refrigerant from the first heat exchanger using the using the CO₂ depleted flue gas from the flue gas expander,
a second flue gas expander configured to expand the reheated compressed CO₂ depleted flue gas from the second heat exchanger, and
a fourth heat exchanger configured to reheat the CO₂ depleted flue gas from the third exchanger.

According to some embodiments, the flue gas treatment system further comprises a selective catalytic reduction (SCR) unit for removal of nitrogen oxides (NOx) from the flue gas stream, arranged downstream of the flue gas adsorption drier, with reference to the general flow direction of the CO₂ depleted flue gas stream.

According to aspects illustrated herein, there is provided a method for condensation of carbon dioxide (CO₂) in a flue gas stream using a circulating stream of an external refrigerant, said method comprising
a) compression and at least partial condensation of external refrigerant to obtain condensed external refrigerant,
b) condensation of CO₂ in the flue gas stream by refrigeration of the flue gas stream through at least partial evaporation of condensed external refrigerant obtained in step a),
c) separation by distillation of the condensed CO₂ from the flue gas stream, and
d) chilling of the condensed external refrigerant for use in the refrigeration of step b) using the condensed CO₂ separated in step c).

According to some methods, the said external refrigerant is propane or propylene.

According to some methods, the said external refrigerant is ammonia. The above described and other features are exemplified by the following figures and detailed description. Further objects and features of the present invention will be apparent from the description

### Brief description of the Drawings

Referring now to the figures, which are exemplary embodiments:
Figure 1 schematically depicts an embodiment of a CO₂ separation system.
Figure 2 schematically depicts an embodiment of a CO₂ separation system.
Figure 3 schematically depicts an embodiment of a CO₂ separation system.

### Detailed description of preferred embodiments

Pressures herein are in the unit "bar", and denote absolute pressures unless indicated otherwise.

The terms "indirect" or "indirectly" as used herein in connection with heat exchange between two fluids, such as heating, cooling or chilling, denotes that the heat exchange occurs without mixing the two fluids together. Such indirect heat exchange may for example be performed in an indirect-contact heat exchanger, wherein the fluid streams remain separate and the heat transfers continuously through an impervious dividing wall.

The refrigeration system or flue gas treatment system of the various aspects disclosed herein may for example be implemented in a combustion plant, such as a fossil fired boiler system. The applications of the system and method is not limited, typically they are useful for all gas streams having an increased CO2 concentration, for example CO2 concentration of above 50 %.

Typically, the flue gas leaving a fossil fired oxy boiler system will contain 50-80 % by volume of carbon dioxide. The balance of the "carbon dioxide rich flue gas" will be about 15-40% by volume of water vapour (H₂O), 2-7 % by volume of oxygen (O₂), since a slight oxygen excess is often preferred in the boiler, and totally about 0-10 % by volume of other gases, including mainly nitrogen (N₂) and argon (Ar), since some leakage of air can seldom be completely avoided.

The carbon dioxide rich flue gas generated in a fossil fired oxy boiler system may typically comprise contaminants in the form of, for example, dust particles, hydrochloric acid, HCl, nitrous oxides, NOₓ, sulfur oxides, SOₓ, and heavy metals, including mercury, Hg.

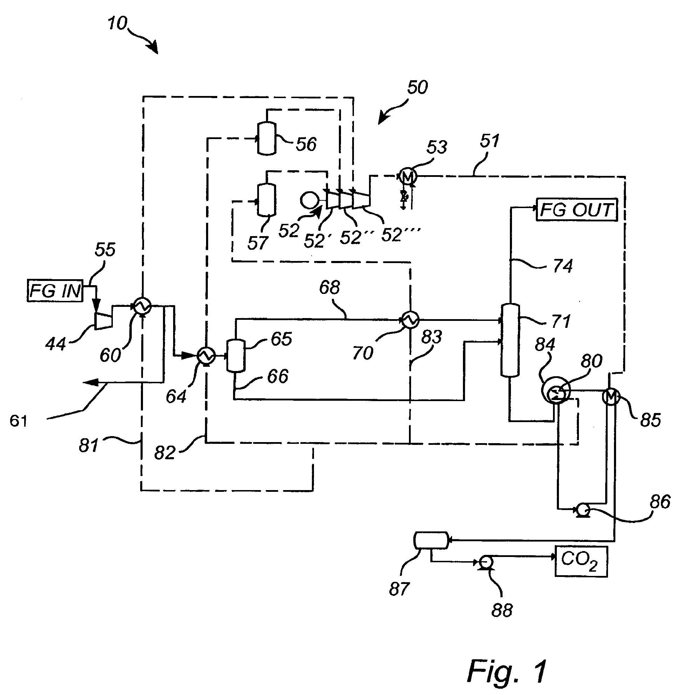

CO₂ separation in the embodiments described herein is achieved by means of compression of the flue gas and condensation by refrigeration. Fig. 1 schematically illustrates a CO₂ separation system for condensation of carbon dioxide (CO₂) in a flue gas stream. The CO₂ separation system of Fig. 1 may be implemented in any fossil fired oxy boiler system. The CO₂ separation system 10 comprises a flue gas conduit 55 operative for forwarding flue gas from a boiler to a stack, optionally via one or more flue gas treatment units, such as a dust removal device, a sulfur dioxide removal system, and a flue gas condenser.

The CO₂ separation system 10 may optionally comprise at least one compressor 44 having at least one, and typically two to ten compression stages for compressing the carbon dioxide rich flue gas. The flue gas compressor is operative for compressing the flue gas to a pressure at which gaseous CO₂ is converted to liquid form when the temperature of the flue gas is reduced in at least one CO₂ condenser 70, for example in two CO₂ condensers 64, 70. The carbon dioxide rich flue gas is generally compressed to a pressure of about 20 bar or higher, such as about 33 bar, in the multistage compressor. Each compression stage could be arranged as a separate unit. As an alternative several compression stages could be operated by a common drive shaft. The compressor 44 may also comprise an intercooling unit (not shown), downstream of one or more of the compression stages. The intercooling unit may further be configured to collect and dispose of any liquid condensate formed during compression and/or cooling of the carbon dioxide rich flue gas.

The CO₂ separation system 10 comprises a refrigeration system 50 having a refrigeration circuit 51 containing refrigerant in liquid and/or vapor form. A number of different refrigerants can be used to supply the cooling and condensing duties required for condensation of CO₂ in the refrigeration system. Examples of refrigerants that can be used include propane (R290) and propylene (R1270) and mixtures thereof. Another option is ammonia. Also other refrigerants having the desired thermodynamic and chemical properties can also be used as desired.

The refrigeration circuit 51 comprises a multistage refrigerant 52 compressor configured to compress the refrigerant to a predetermined pressure. The multistage compressor 52 may for example have three or more compression stages, each compression stage configured to compress the refrigerant to a certain pressure level. The multistage compressor 52 may be provided with intercooling between two or more of the compression stages. Cold, gaseous refrigerant is compressed from a low pressure within the multistage compressor 52 to a pressure P0, for example in the range of about 8 to 25 bar (depending on the refrigerant and condensing medium temperature), and directed into refrigerant condenser 53. High pressure refrigerant is then substantially condensed within refrigerant condenser 53, which may be cooled by water, forced air or the like.

The condensed refrigerant is distributed to a flue gas chiller 60, a first CO₂ condenser 64 and a second CO₂ condenser 70, where it is used for chilling the flue gas containing CO₂.

The flue gas chiller 60 comprises a metering device, for example an expansion valve (not shown), for reducing the pressure and inducing evaporation of the condensed refrigerant. The flue gas chiller further comprises a heat exchanger, in which the refrigerant is expanded to a pressure P1, for example about 5 bar, and the boiling refrigerant is used to indirectly chill the flue gas stream to a temperature in the range of about 10-20 °C. Water which precipitates from the flue gas during the chilling in the flue gas chiller is separated from the flue gas stream and removed via line 61. The chilled flue gas depleted in water vapor from the flue gas chiller is then forwarded to the first CO₂ condenser 64, optionally via an adsorption drier (not shown).

The first CO₂ condenser 64 comprises a metering device, for example an expansion valve (not shown), for reducing the pressure and inducing evaporation of the condensed refrigerant. The first CO₂ condenser 64 further comprises a heat exchanger, in which liquefied refrigerant is expanded to a pressure P2 (<P1), for example about 2.7 bar, and the boiling refrigerant is used to indirectly chill the flue gas stream to a temperature of about -20 °C, causing at least a portion of the CO₂ from the flue gas to condense. The first CO₂ condenser 64 further comprises a first gas/liquid separator 65. The gas/liquid separator 65 separates condensed CO₂ in liquid form from the residual partially CO₂ depleted flue gas (vent gas). The liquefied CO₂ leaves the gas/liquid separator 65 via line 66 and is pumped to a CO₂ product drum by CO₂ product pump. The vent gas leaves the gas/liquid separator 65 via line 68.

The partially CO₂ depleted ventgas is forwarded via line 68 to the second CO₂ condenser 70. The second CO₂ condenser 70 comprises a metering device, for example an expansion valve (not shown), for reducing the pressure and inducing evaporation of the condensed refrigerant. The second CO₂ condenser 70 further comprises a heat exchanger, in which liquefied refrigerant is expanded to a pressure P3 (<P2), for example atmospheric pressure (about 1 bar), and the boiling refrigerant is used to indirectly chill the flue gas stream to a temperature of about -42 °C, causing at least a portion of the CO₂ from the flue gas to condense. The refrigeration temperature is limited by the minimal achievable temperature of the refrigerant. For propylene or propane, this temperature limit would be about - 45 °C at ambient pressure level.

The partially condensed flue gas stream from the second CO₂ condenser 70 is forwarded to a stripper column 71 for distillative purification of the liquid. The stream is fed to the column at the top and the liquid portion serves as the required reflux. Thereby, the stripper column does not require any overhead condensation system for reflux generation. Consequently, the overall investment cost of the system is minimised. The liquefied CO₂ runs down the stripper column and is intensively contacted with the upflowing gas. This contacting is extracting (stripping) trace impurities of the liquid CO2 and thus the concentration of the CO2 is increased. The purified CO2 leaves the stripper column 71 via line 72 to a stripper reboiler 84. In the reboiler a part of the CO2 is vaporized to generate the required gas stream for the column. The heat is provided by subcooling a part of the refrigerant.
The remaining liquid may be extracted either from the column sump or, as shown, from the reboiler and subsequently, is pumped to a CO₂ product drum by CO₂ pump 86, via another heat exchanger 85 where the refrigerant is cooled to about 1-5 °C, for example 3-4 °C. From the drum the CO2 product is raised in pressure by CO₂ product pump 88 to the level required for further processing.

The refrigeration system 50 further comprises a refrigerant chiller 80. The refrigerant chiller 80 comprises a heat exchanger configured to chill refrigerant by indirect contact with cold purified liquid CO₂ from the stripper column 71.

The temperature of the condensed CO₂ from the first and second CO₂ condensers 64, 70 may generally be about -20 °C and -42 °C respectively. The temperature of the refrigerant may be reduced from in the range of about 15-30 °C to about 1 °C in the refrigerant chiller 80.

Evaporated refrigerant from the flue gas chiller 60, the first CO₂ condenser 64 and the second CO₂ condenser 70 is returned to the multistage compressor 52 for recompression and, after condensation, use for further cooling of the flue gas stream. The evaporated refrigerant from the the flue gas chiller 60 at a pressure P1, for example about 5 bar, is forwarded to a first compression stage 52' of the multistage compressor 52 suitable for receiving refrigerant at a pressure of P1. The evaporated refrigerant from the first CO₂ condenser 64 at a pressure P2, for example about 2.7 bar, is forwarded, optionally via a refrigerant compressor suction drum 56, to a second compression stage 52" of the multistage compressor 52 suitable for receiving refrigerant at a pressure of P2. The evaporated refrigerant from the second CO₂ condenser 70 at a pressure P3, for example about 1 bar, is forwarded, optionally via a refrigerant compressor suction drum 57, to a third compression stage 52'" of the multistage compressor 52 suitable for receiving refrigerant at a pressure of P3. The evaporated refrigerant streams are then recompressed to pressure P0 and reused in the refrigeration circuit.

The liquid CO₂ product from the refrigerant chiller 80 may be collected in a CO₂ product drum 87 and can then be pumped by CO₂ product pump 88 to a pressure level suitable for transportation or further processing. If the pressure would be increased to this level in a single step in CO₂ product pump, the pump would introduce too much heat into the CO₂ product stream and thereby reduce the duty available for chilling of the refrigerant in the refrigerant chiller and/or auxiliary refrigerant chiller(s).

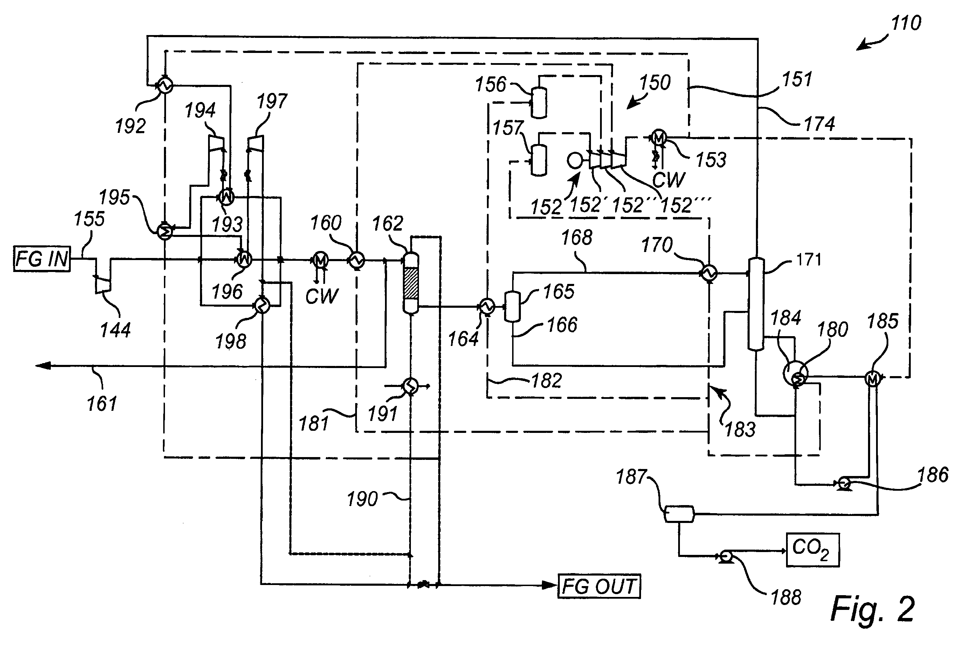

Fig. 2 schematically depicts an embodiment of a CO₂ separation system integrated into a flue gas treatment system for removing CO₂ from a flue gas stream, for example a flue gas stream generated in a boiler combusting a fuel in the presence of a gas containing oxygen.

The CO₂ separation system 110 comprises at least one compressor 144 having at least one, and typically two to ten compression stages for compressing the carbon dioxide rich flue gas. The flue gas compressor 144 is operative for compressing the flue gas to a pressure at which gaseous CO₂ is converted to liquid form when the temperature of the flue gas is reduced in the CO₂ condensers 164, 170. The carbon dioxide rich flue gas is generally compressed to a pressure of about 20 bar or higher, such as about 33 bar, in the multistage compressor. Each compression stage could be arranged as a separate unit. As an alternative several compression stages could be operated by a common drive shaft. The compressor 144 may also comprise an intercooling unit (not shown), downstream of one or more of the compression stages. The intercooling unit may further be configured to collect and dispose of any liquid condensate formed during compression and/or cooling of the carbon dioxide rich flue gas.

Residual water may cause formation of ice in the heat exchangers of the CO₂ condensers, eventually resulting in problems with reduced cooling capacity and clogging of the heat exchangers. By providing an adsorption drier upstream of the CO2 condensers, such problems are avoided, or at least minimized. Thus, the CO₂ separation system 110 may further comprise an adsorption drier 162 operative for removing at least a portion of the remaining water vapor in the CO₂ rich flue gas stream. The adsorption drier 162 is provided with a packing comprising a water vapor adsorbent, also referred to as a desiccant, having affinity for water vapour. The desiccant may, for example, be silica gel, calcium sulfate, calcium chloride, montmorillonite clay, molecular sieves, or another material that is, as such, known for its use as a desiccant. Hence, as the compressed and chilled carbon dioxide rich flue gas passes through the packing, at least a portion of the content of water vapour of the gas will be adsorbed on the desiccant of the packing. Since water vapor in the flue gas could block the heat exchangers of the CO₂ condensers, the water dew point of the flue gas is reduced to about -60 °C in the adsorption drier. The drier material may preferably be selected such that it can withstand eventually forming acids. This allows omitting additional steps for removal of SOₓ and NOₓ compounds that could otherwise harm the integrity of the adsorbent.

The adsorption drier 162 may be provided with a regeneration and heating system for intermittent regeneration of the water vapour adsorption capacity of the adsorption drier. A supply duct 190 is arranged for supplying a regeneration gas to the system. The regeneration gas is preferably an inert gas which does not react with the packing of the adsorption drier. Examples of suitable gases include nitrogen or another inert gas that, preferably, holds a low amount of mercury and water vapour. Preferably, vent gas usually comprising nitrogen as one of its main constituents, separated from the carbon dioxide in the CO₂ separation system 110 is utilized as regeneration gas. The regeneration system comprises a heater 191 which is adapted for heating the regeneration gas. A heating circuit is connected to the heater for circulating a heating medium, such as steam, in the heater. For regeneration of the material of the packing of the adsorption drier 162, the heater may typically heat the regeneration gas to a temperature of about 120-300 °C. During a regeneration sequence, the heated regeneration gas is supplied to the adsorption drier 162 from the regeneration and heating system. The regeneration gas heats the material of the packing and causes desorption of water vapour.

According to one embodiment, the system may be provided with two parallel adsorption driers, with one of those parallel adsorption driers being in operation while the other parallel adsorption drier undergoes regeneration. According to another embodiment, the carbon dioxide rich flue gas could be emitted to the atmosphere during the regeneration of the packing of the adsorption drier.

With reference to Fig. 2, the flue CO₂ separation system 110 comprises a refrigeration system 150 for condensation of carbon dioxide in the flue gas stream. The refrigeration system 150 comprises a refrigeration circuit 151 containing refrigerant in liquid and/or vapor form. A number of different refrigerants can be used to supply the cooling and condensing duties required for condensation of CO₂ in the refrigeration system. Examples of refrigerants that can be used include propane (R290) and propylene (R1270) and mixtures thereof. Other refrigerants having the desired thermodynamic and chemical properties also can be used as desired.

The refrigeration circuit 151 comprises a multistage refrigerant compressor 152 configured to compress the refrigerant to a predetermined pressure. The multistage compressor may for example have three or more compression stages, each compression stage configured to compress the refrigerant to a certain pressure level. The multistage compressor may be provided with intercooling between two or more of the compression stages.

Cold, gaseous refrigerant is compressed from a low pressure within the multistage compressor 152 to a pressure P0, for example in the range of about 8 to about 25 bar (depending on the refrigerant and condensing medium temperature), and directed into refrigerant condenser 153. High pressure refrigerant is then substantially condensed within refrigerant condenser 153, which may be cooled by water, forced air or the like.

The condensed refrigerant is distributed to a flue gas chiller 160, a first CO₂ condenser 164 and a second CO₂ condenser 170, where it is used for chilling the flue gas containing CO₂ travelling in the flue gas conduit 155.

The flue gas chiller 160 comprises a metering device, for example an expansion valve (not shown), for reducing the pressure and inducing evaporation of the condensed refrigerant. The flue gas chiller further comprises a heat exchanger, in which the refrigerant is expanded to a pressure P1, for example about 5 bar, and the boiling refrigerant is used to indirectly chill the flue gas stream to a temperature in the range of about 6 to 20 °C. Water which precipitates from the flue gas during the chilling in the flue gas chiller is separated from the flue gas stream and removed via line 161. The chilled flue gas depleted in water vapor from the flue gas chiller is then forwarded to the adsorption drier 162.

The chilled and dried flue gas from the adsorption drier 162 is forwarded to the first CO₂ condenser 164. The first CO₂ condenser comprises a metering device, for example an expansion valve (not shown), for reducing the pressure and inducing evaporation of the condensed refrigerant. The first CO₂ condenser further comprises a heat exchanger, in which liquefied refrigerant is expanded to a pressure P2 (<P1), for example about 2.7 bar, and the boiling refrigerant is used to indirectly chill the flue gas stream to a temperature of about -20 °C, causing at least a portion of the CO₂ from the flue gas to condense. The first CO₂ condenser 164 further comprises a first gas/liquid separator 165. The gas/liquid separator 165 separates condensed CO₂ in liquid form from the residual partially CO₂ depleted flue gas (vent gas). The liquefied CO₂ leaves the gas/liquid separator 165 via line 166 and is forwarded to the stripper column 171.

The partially CO₂ depleted ventgas is forwarded via line 168 to the second CO₂ condenser 170. The second CO₂ condenser 170 comprises a metering device, for example an expansion valve (not shown), for reducing the pressure and inducing evaporation of the condensed refrigerant. The second CO₂ condenser further comprises a heat exchanger, in which liquefied refrigerant is expanded to a pressure P3 (<P2), for example atmospheric pressure (about 1 bar), and the boiling refrigerant is used to indirectly chill the flue gas stream to a temperature of about -42 °C, causing at least a portion of the CO₂ from the flue gas to condense. The refrigeration temperature is limited by the minimal achievable temperature of the refrigerant. For propylene or propane, this temperature limit would be about-45 °C at ambient pressure level.

The partially condensed flue gas stream from the second CO₂ condenser 170 is forwarded to a stripper column 171 for distillative purification of the liquid. The stream is fed to the column at the top and the liquid portion serves as the required reflux. Thereby, the stripper column does not require any overhead condensation system for reflux generation. Consequently, the overall investment cost of the system is minimised. The liquefied CO₂ runs down the stripper column and is intensively contacted with the upflowing gas. This contacting is extracting (stripping) trace impurities of the liquid CO2 and thus the concentration of the CO2 is increased. The purified CO2 leaves the stripper column 171 via line 172 to a stripper reboiler 184. In the reboiler a part of the CO2 is vaporized to generate the required gas stream for the column. The heat is provided by subcooling a part of the refrigerant. The remaining liquid may be extracted either from the column sump or, as shown, from the reboiler and subsequently, is pumped to a CO₂ product drum by CO₂ pump 186, via another heat exchanger 185 where the refrigerant is cooled to about 1-5 °C, for example 3-4 °C. From the drum the CO2 product is raised in pressure by CO₂ product pump 188 to the level required for further processing.

The refrigeration system 150 further comprises a refrigerant chiller 180. The refrigerant chiller 180 comprises a heat exchanger configured to chill refrigerant by indirect contact with cold purified liquid CO₂ from the stripper column 171.

The temperature of the condensed CO₂ from the first and second CO₂ condensers 164, 170 may generally be about -20 °C and -42 °C respectively. The temperature of the refrigerant may be reduced from in the range of about 15-30 °C to about 1 °C in the refrigerant chiller 180.

The refrigeration system 150 further comprises a refrigerant chiller 180. The refrigerant chiller 180 comprises a heat exchanger configured to chill refrigerant by indirect contact with cold purified liquid CO₂ from the stripper column.

The temperature of the condensed CO₂ from the first and second CO₂ condensers 164, 170 may generally be about -20 °C and -42 °C respectively. The temperature of the refrigerant may be reduced from in the range of about 15-30 °C to about 1 °C in the refrigerant chiller 180.

The chilled refrigerant from the refrigerant chiller 180 is split and distributed via lines 181, 182, 183 to the flue gas chiller 160, first CO₂ condenser 164 and second CO₂ condenser 170. The quantity of refrigerant distributed to each of the flue gas chiller 160, the first CO₂ condenser 164 and the second CO₂ condenser 170 may be selected so as to provide the desired refrigeration in each heat exchanger.

The liquid CO₂ product from the refrigerant chiller 180 may be collected in a CO₂ product drum 187 and can then be pumped by CO₂ product pump 188 to a pressure level suitable for transportation or further processing. If the pressure would be increased to this level in a single step in CO₂ product pump, the pump would introduce too much heat into the CO₂ product stream and thereby reduce the duty available for chilling of the refrigerant in the refrigerant chiller and/or auxiliary refrigerant chiller(s).

The refrigeration system 150 in Fig. 2 further comprises an arrangement for precooling at least a portion of the condensed refrigerant coming from the refrigerant condenser using the cold CO₂ depleted flue gas from the second CO₂ condenser. The arrangement comprises a first heat exchanger 192 configured for cooling the refrigerant coming from the refrigerant condenser 153, by indirect contact with cold CO₂ depleted flue gas from the second CO₂ condenser 170 via line 174. A second heat exchanger 193 is configured to reheat the CO₂ depleted flue gas from the first heat exchanger 192 using warm flue gas from the flue gas compressor 144. A flue gas expander 194 is configured to expand the reheated compressed CO₂ depleted flue gas from the second heat exchanger resulting in a reduction of temperature of the flue gas. The flue gas from the flue gas expander 194 is forwarded to a third heat exchanger 195 where it is used to further cool the condensed refrigerant from the first heat exchanger.

Optionally, the arrangement further comprises a fourth heat exchanger 196 configured to reheat the CO₂ depleted flue gas from the third heat exchanger 195 using warm flue gas from the flue gas compressor 144, a second flue gas expander 197 configured to expand the reheated CO₂ depleted flue gas from the fourth heat exchanger 196 resulting in a reduction of temperature of the flue gas, and a fifth heat exchanger 198 configured to reheat the expanded flue gas from the second flue gas expander 197 using warm flue gas from the flue gas compressor 144. This optional arrangement provides a reheated flue gas which is suitable, possibly after additional heating in a regeneration gas heater 191, for use as a regeneration gas for regeneration of the adsorption drier 162 as described above. The reheated flue gas may be forwarded to an (optional) SCR unit for removal of nitrogen oxides from the flue gas by selective catalytic reduction to N₂.

Evaporated refrigerant from the flue gas chiller 160, the first CO₂ condenser 164 and the second CO₂ condenser 170 is returned to the multistage compressor 152 for recompression and use for further cooling of the flue gas stream. The evaporated refrigerant from the the flue gas chiller 160 at a pressure P1, for example about 5 bar, is forwarded to a first compression stage 152' of the multistage compressor 152 suitable for receiving refrigerant at a pressure of P1. The evaporated refrigerant from the first CO₂ condenser 164 at a pressure P2, for example about 2.7 bar, is forwarded, optionally via a refrigerant compressor suction drum 156, to a second compression stage 152" of the multistage compressor 152 suitable for receiving refrigerant at a pressure of P2. The evaporated refrigerant from the second CO₂ condenser 170 at a pressure P3, for example about 1 bar, is forwarded, optionally via a refrigerant compressor suction drum 157, to a third compression stage 152"' of the multistage compressor 152 suitable for receiving refrigerant at a pressure of P3. The evaporated refrigerant streams are then recompressed to pressure P0 and reused in the refrigeration circuit.

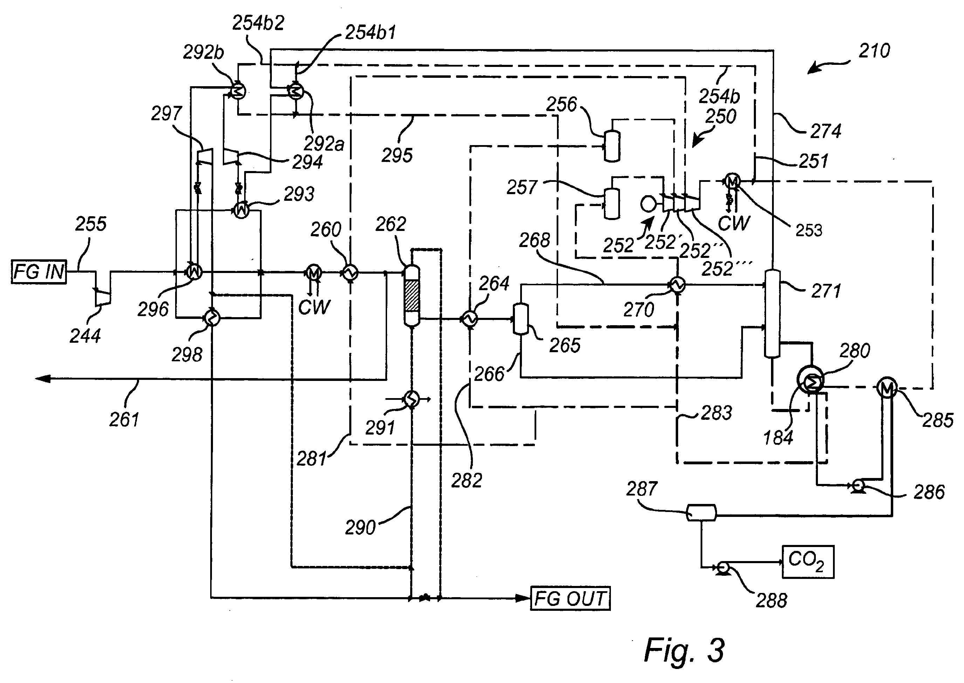

With reference to Fig. 3, the CO₂ separation system 210 comprises a refrigeration system 250. The refrigeration system 250 comprises a refrigeration circuit 251 containing refrigerant in liquid and/or vapor form. A number of different refrigerants can be used to supply the cooling and condensing duties required for condensation of CO₂ in the refrigeration system. Examples of refrigerants that can be used include R290 (propane) and R1270 propylene and mixtures thereof. Another option of refrigerants is ammonia. Other refrigerants having the desired thermodynamic and chemical properties also can be used as desired.

The refrigeration circuit comprises a multistage refrigerant compressor 252 configured to compress the refrigerant to a predetermined pressure. The multistage compressor may for example have three or more compression stages, each compression stage configured to compress the refrigerant to a certain pressure level. The multistage compressor may be provided with intercooling between two or more of the compression stages.

Cold, gaseous refrigerant is compressed from a low pressure within the multistage compressor 252 to a pressure P0, for example in the range of about 8 to about 25 bar (depending on the refrigerant and condensing medium temperature), and directed into refrigerant condenser 253. High pressure refrigerant is then substantially condensed within refrigerant condenser 253, which may be cooled by water, forced air or the like.

The refrigeration circuit 251 comprises a liquid split which splits the refrigerant flow from the refrigerant condenser 253 into a first and second portion.

The first portion of the condensed refrigerant is directed via line 254a to a refrigerant chiller 280 configured to chill the portion of the condensed refrigerant using liquid CO₂ separated in the stripper column 271. The second portion of the condensed refrigerant is directed via line 254b to a heat exchanger arrangement configured to cool a second portion of the condensed refrigerant using the CO₂ depleted flue gas from the second CO₂ condenser 270.

The first portion of the condensed refrigerant is forwarded from the refrigerant condenser 253 to the refrigerant chiller 280 via line 254a. The refrigerant chiller comprises a heat exchanger configured to chill refrigerant by indirect contact with cold condensed CO₂ from the stripper column 271.

The partially condensed flue gas stream from the second CO₂ condenser 270 is forwarded to a stripper column 271 for distillative purification of the liquid.
The stream is fed to the column at the top and the liquid portion serves as the required reflux. Thereby, the stripper column does not require any overhead condensation system for reflux generation. Consequently, the overall investment cost of the system is minimised. The liquefied CO₂ runs down the stripper column and is intensively contacted with the upflowing gas. This contacting is extracting (stripping) trace impurities of the liquid CO₂ and thus the concentration of the CO₂ is increased. The purified CO₂ leaves the stripper column 271 via line 272 to a stripper reboiler 284. In the reboiler a part of the CO₂ is vaporized to generate the required gas stream for the column. The heat is provided by subcooling the required gas stream for the column. The heat is provided by subcooling a part of the refrigerant. The remaining liquid may be extracted either from the column sump or, as shown, from the reboiler and subsequently, is pumped to a CO₂ product drum by CO₂ pump 81, via another heat exchanger 285 where the refrigerant is cooled to about 1-5 °C, for example 3-4 °C. From the drum the CO2 product is raised in pressure by CO₂ product pump 288 to the level required for further processing.

The refrigeration system 250 further comprises a refrigerant chiller 280. The refrigerant chiller 280 comprises a heat exchanger configured to chill refrigerant by indirect contact with cold purified liquid CO₂ from the stripper column 71.

The temperature of the condensed CO₂ from the first and second CO₂ condensers 264, 270 may generally be about -20 °C and -42 °C respectively. The temperature of the refrigerant may be reduced from in the range of about 15-30 °C to about 1 °C in the refrigerant chiller 280.

The quantity of refrigerant distributed to each of the flue gas chiller 260, the first CO₂ condenser 264 and the second CO₂ condenser 270 may be selected so as to provide the desired refrigeration in each heat exchanger.

The flue gas chiller 260 comprises a metering device, for example an expansion valve (not shown), for reducing the pressure and inducing evaporation of the condensed refrigerant. The flue gas chiller further comprises a heat exchanger, in which the refrigerant is expanded to a pressure P1, for example about 5 bar, and the boiling refrigerant is used to indirectly chill the flue gas stream to a temperature in the range of about 6 to 20 °C. Water which precipitates from the flue gas during the chilling in the flue gas chiller is separated from the flue gas stream and removed via line 261. The chilled flue gas depleted in water vapor from the flue gas chiller is then forwarded to the first CO₂ condenser 264, optionally via an adsorption drier 262.

The first CO₂ condenser comprises a metering device, for example an expansion valve (not shown), for reducing the pressure and inducing evaporation of the condensed refrigerant. The first CO₂ condenser further comprises a heat exchanger, in which liquefied refrigerant is expanded to a pressure P2 (<P1), for example about 2.7 bar, and the boiling refrigerant is used to indirectly chill the flue gas stream to a temperature of about -20 °C, causing at least a portion of the CO₂ from the flue gas to condense. The first CO₂ condenser 264 further comprises a first gas/liquid separator 265. The gas/liquid separator 265 separates condensed CO₂ in liquid form from the residual partially CO₂ depleted flue gas (vent gas). The liquefied CO₂ leaves the first gas/liquid separator 265 via line 266 and is pumped by CO₂ product pump to a pressure, for example about 60 bar, sufficient to prevent evaporation of the CO₂ product when it is used for cooling the refrigerant in the refrigerant chiller 280. The vent gas leaves the gas/liquid separator 265 via line 268.

The partially CO₂ depleted ventgas is forwarded via line 268 to the second CO₂ condenser 270. The second CO₂ condenser comprises a metering device, for example an expansion valve (not shown), for reducing the pressure and inducing evaporation of the condensed refrigerant. The second CO₂ condenser further comprises a heat exchanger, in which liquefied refrigerant is expanded to a pressure P3 (<P2), for example atmospheric pressure (about 1 bar), and the boiling refrigerant is used to indirectly chill the flue gas stream to a temperature of about -42 °C, causing at least a portion of the CO₂ from the flue gas to condense. The refrigeration temperature is limited by the minimal achievable temperature of the refrigerant. For propylene or propane, this temperature limit would be about-45 °C at ambient pressure level. The second CO₂ condenser further comprises a gas/liquid separator 271. The gas/liquid separator 271 separates condensed CO₂ in liquid form from the residual partially CO₂ depleted flue gas (vent gas).

The partially condensed flue gas stream from the second CO₂ condenser 270 is forwarded to a stripper column 271 for distillative purification of the liquid. The stream is fed to the column at the top and the liquid portion serves as the required reflux. Thereby, the stripper column does not require any overhead condensation system for reflux generation. Consequently, the overall investment cost of the system is minimised. The liquefied CO₂ runs down the stripper column and is intensively contacted with the upflowing gas. This contacting is extracting (stripping) trace impurities of the liquid CO₂ and thus the concentration of the CO2 is increased. The purified CO₂ leaves the stripper column 271 via line 272 to a stripper reboiler 284. In the reboiler a part of the CO₂ is vaporized to generate the required gas stream for the column. The heat is provided by subcooling a part of the refrigerant.
The remaining liquid may be extracted either from the column sump or, as shown, from the reboiler and subsequently, is pumped to a CO₂ product drum by CO₂ pump 286, via another heat exchanger where the refrigerant is cooled to about 1-5 °C, for example 3-4 °C. From the drum the CO2 product is raised in pressure by CO₂ product pump 288 to the level required for further processing.

If the pressure would be increased to this level in a single step in CO₂ product pump, the pump would introduce too much heat into the CO₂ product stream and thereby reduce the duty available for chilling of the refrigerant in the refrigerant chiller 280.

The second portion of the condensed refrigerant is directed via line 254b to a heat exchanger arrangement configured to cool a second portion of the condensed refrigerant using the CO₂ depleted flue gas from the second CO₂ condenser 270. The heat exchanger arrangement comprises two heat exchangers 292a, 292b arranged in parallel. The second portion of the condensed refrigerant from the refrigerant condenser is divided into two substreams, each directed towards one of the two heat exchangers via lines 254b1 and 254b2 respectively. The heat exchanger 292a is configured to cool substream 254b1 of the condensed refrigerant using the CO₂ depleted flue gas from the second CO₂ condenser 270. The heat exchanger 293 is configured to reheat the CO₂ depleted flue gas from the heat exchanger 292a using the warm flue gas from the flue gas compressor 244. A flue gas expander 294 is configured to expand the reheated compressed CO₂ depleted flue gas from the heat exchanger 293. The heat exchanger 292b is configured to cool substream 254b2 of the condensed refrigerant using the CO₂ depleted flue gas from the flue gas expander 294. The cooled first and second substreams from the heat exchangers 292a, 292b are combined and forwarded via line 295 to line 283, where it is combined with the refrigerant coming from the auxiliary refrigerant chiller 286.

Optionally, the arrangement further comprises a heat exchanger 296 configured to reheat the CO₂ depleted flue gas from the heat exchanger 292b using warm flue gas from the flue gas compressor 244, a second flue gas expander 297 configured to expand the reheated CO₂ depleted flue gas from the heat exchanger 296 resulting in a reduction of temperature of the flue gas, and a heat exchanger 298 configured to reheat the expanded flue gas from the second flue gas expander 297 using warm flue gas from the flue gas compressor 244. This optional arrangement provides a reheated flue gas which is suitable, possibly after additional heating in a regeneration gas heater 291, for use as a regeneration gas for regeneration of the adsorption drier 262 as described above.

Optionally, the reheated flue gas may be forwarded to an (optional) SCR unit for removal of nitrogen oxides from the flue gas by selective catalytic reduction to N₂.

Evaporated refrigerant from the flue gas chiller 260, the first CO₂ condenser 264 and the second CO₂ condenser 270 is returned to the multistage compressor 252 for recompression and use for further cooling of the flue gas stream. The evaporated refrigerant from the the flue gas chiller 260 at a pressure P1, for example about 5 bar, is forwarded to a first compression stage 252' of the multistage compressor 252 suitable for receiving refrigerant at a pressure of P1. The evaporated refrigerant from the first CO₂ condenser 264 at a pressure P2, for example about 2.7 bar, is forwarded, optionally via a refrigerant compressor suction drum 256, to a second compression stage 252" of the multistage compressor 252 suitable for receiving refrigerant at a pressure of P2. The evaporated refrigerant from the second CO₂ condenser 270 at a pressure P3, for example about 1 bar, is forwarded, optionally via a refrigerant compressor suction drum 257, to a third compression stage 252'" of the multistage compressor 252 suitable for receiving refrigerant at a pressure of P3. The evaporated refrigerant streams are then recompressed in the multistage compressor 252 to pressure P0 and reused in the refrigeration circuit.

Advantages of embodiments described hereinabove include:
- Lower energy consumption as compared to conventional refrigerated CO₂ separation systems;
- Allows use of simple, robust heat exchanger designs and materials that are robust against fouling and corrosion;
- No flue gas polishing equipment necessary for process reasons;
- Allows a more simple design of equipment;
- Allows more conventional and simple equipment and use of carbon steel downstream of the drier;
- Allows transportation of the CO₂ via pumping instead of more costly compression;
- More simple process scheme having no column overhead system like overhead vapor condenser, reflux drum and reflux pump.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A flue gas treatment system for removing CO₂ from a flue gas stream, comprising
a flue gas compressor (144, 244),
at least one flue gas adsorption drier (162, 262) downstream of the flue gas compressor (144, 244),
a refrigeration system suitable for condensation of carbon dioxide (CO₂), in a flue gas stream, said system comprising a refrigeration circuit (151, 251) containing a refrigerant,
wherein said refrigeration circuit comprises:
a multistage refrigerant compressor (152, 252),
a refrigerant condenser (153, 253) downstream of the multistage refrigerant compressor (152, 252),
a refrigerant chiller (180, 280) downstream of the refrigerant condenser (153,253),
a flue gas chiller (160, 260),
at least one condenser (170, 270) having a cooling fluid for the flue gas that is supplied from the refrigerant chiller (180, 280) and is supplied to the multi stage refrigerant compressor (152, 252), the at least one condenser (170, 270) being downstream of the flue gas adsorption drier (162, 262),
and
a stripper column (171, 271) suitable for allowing distillation supplied with the flue gas cooled by the flue gas chiller (160, 260) and at least one condenser (170, 270); the stripper column (171, 271) having a reboiler (184, 284) suitable for vaporizing a part of carbon dioxide to generate the required gas stream for the strip column (171, 271), the heat being provided to the reboiler by the refrigerant by chilling the refrigerant in the refrigerant Chiller by indirect contact with cold purified CO₂ from the stopper column,
wherein the flue gas chiller is arranged between the flue gas compressor and the flue gas adsorption drier and the the flue gas adsorption drier and the at least one condenser are arranged in series upstream of the stripper column,
**characterised in that**
said system comprises a first condenser (164, 264) being arranged in series upstream of the condenser (170, 270) and downstream of the flue gas adsorption drier (162, 262), wherein the first condenser (164, 264) is supplied with a refrigerant from the refrigerant chiller (180, 280) and supplies the refrigerant to the multistage refrigerant compressor (152, 252),
the flue gas chiller (160, 260) has a cooling fluid for the flue gas that is supplied from the refrigerant chiller (180, 280) and is supplied to the multistage refrigerant compressor (152, 252),
the flue gas chiller (160, 260) comprises an expansion valve suitable for reducing the pressure and inducing evaporation of the condensed refrigerant, and a heat exchanger, in which the refrigerant is suitable to be expanded to a pressure P1 and the boiling refrigerant is suitable to be used to indirectly chill the flue gas stream,
the first condenser (164, 264) comprises an expansion valve, suitable for reducing the pressure and inducing evaporation of the condensed refrigerant and a heat exchanger, in which liquefied refrigerant is suitable to be expanded to a pressure P2 lower than P1 and the boiling refrigerant is used to indirectly chill the flue gas stream,
the condenser (170, 270) comprises an expansion valve suitable for reducing the pressure and inducing evaporation of the condensed refrigerant and a heat exchanger, in which liquefied refrigerant is suitable to be expanded to a pressure P3 lower than P2 and the boiling refrigerant is used to indirectly chill the flue gas stream.

2. A flue gas treatment system according to claim 1, said system further comprising
a first heat exchanger (192) configured to cool at least a portion of the condensed refrigerant using the CO2 depleted flue gas from the stripper column,
a second heat exchanger (193) configured to reheat the CO₂ depleted flue gas from the refrigerant chiller using warm flue gas from the flue gas compressor,
a first flue gas expander (194) configured to expand the reheated compressed CO₂ depleted flue gas from the first heat exchanger,
a third heat exchanger (195) configured to further cool the condensed refrigerant from the refrigerant chiller using the CO₂ depleted flue gas from the flue gas expander,
a fourth heat exchanger (196) configured to reheat the CO₂ depleted flue gas from the second heat exchanger using warm flue gas from the flue gas compressor,
a second flue gas expander (197) configured to expand the reheated compressed CO₂ depleted flue gas from the second heat exchanger, and
optionally, a fifth heat exchanger (198) configured to reheat the CO₂ depleted flue gas from the third exchanger.

3. A flue gas treatment system according to claim 1, said system further comprising
a first heat exchanger (192) configured to cool at least a portion of the condensed refrigerant using the CO₂ depleted flue gas from the stripper column,
a second heat exchanger (193) configured to reheat the CO₂ depleted flue gas from the first heat exchanger using warm flue gas from the flue gas compressor,
a first flue gas expander (194) configured to expand the reheated compressed CO₂ depleted flue gas from the second heat exchanger,
a third heat exchanger (195) configured to further cool the condensed refrigerant from the first heat exchanger using the CO₂ depleted flue gas from the flue gas expander,
a second flue gas expander (197) configured to expand the reheated compressed CO₂ depleted flue gas from the second heat exchanger, and
a fourth heat exchanger (196) configured to reheat the CO₂ depleted flue gas from the third exchanger.

4. A flue gas treatment system according to any one of claims 1 to 3, said system further comprising
a selective catalytic reduction (SCR) unit for removal of nitrogen oxides (NOx) from the flue gas stream, arranged downstream of the flue gas adsorption drier, with reference to the general flow direction of the flue gas stream.

## Patentansprüche

1. Rauchgasbehandlungssystem zum Entfernen von CO₂ aus einem Rauchgasstrom, umfassend
einen Rauchgaskompressor (144, 244),
wenigstens einen dem Rauchgaskompressor (144, 244) nachgeschalteten Rauchgas-Adsorptionstrockner (162, 262),
ein Kühlsystem, das für die Kondensation von Kohlendioxid (CO₂) in einem Rauchgasstrom geeignet ist, wobei das System einen Kühlkreis (151, 251) umfasst, der ein Kältemittel enthält,
wobei der Kühlkreis umfasst:
einen mehrstufigen Kältemittelkompressor (152, 252),
einen dem mehrstufigen Kältemittelkompressor (152, 252) nachgeschalteten Kältemittelkondensator (153, 253),
einen dem Kältemittelkondensator (153, 253) nachgeschalteten Kältemittelkühler (180, 280),
einen Rauchgaskühler (160, 260),
wenigstens einen Kondensator (170, 270) mit einem Kühlfluid für das Rauchgas, das von dem Kältemittelkühler (180, 280) zugeführt wird und dem mehrstufigen Kältemittelkompressor (152, 252) zugeführt wird, wobei der wenigstens eine Kondensator (170, 270) dem Rauchgas-Adsorptionstrockner (162, 262) nachgeschaltet ist,
und
eine Strippersäule (171, 271), die dafür geeignet ist, Destillation zu ermöglichen, der das mit dem Rauchgaskühler (160, 260) und wenigstens einem Kondensator (170, 270) gekühlte Rauchgas zugeführt wird; wobei die Strippersäule (171, 271) einen Verdampfer (184, 284) aufweist, der dafür geeignet ist, einen Teil von Kohlendioxid zu verdampfen, um den benötigten Gasstrom für die Strippersäule (171, 271) zu erzeugen, wobei die Wärme dem Verdampfer durch das Kältemittel zugeführt wird, indem das Kältemittel in dem Kältemittelkühler durch indirekten Kontakt mit kaltem gereinigtem flüssigem CO₂ aus der Strippersäule gekühlt wird,
wobei der Rauchgaskühler zwischen dem Rauchgaskompressor und dem Rauchgas-Adsorptionstrockner angeordnet ist und der Rauchgas-Adsorptionstrockner und der wenigstens eine Kondensator in Reihe der Strippersäule vorgeschaltet angeordnet sind,
**dadurch gekennzeichnet, dass**
das System einen ersten Kondensator (164, 264) umfasst, der in Reihe dem Kondensator (170, 270) vorgeschaltet und dem Rauchgas-Adsorptionstrockner (162, 262) nachgeschaltet angeordnet ist, wobei dem ersten Kondensator (164, 264) ein Kältemittel von dem Kältemittelkühler (180, 280) zugeführt wird und er das Kältemittel dem mehrstufigen Kältemittelkompressor (152, 252) zuführt,
der Rauchgaskühler (160, 260) ein Kühlfluid für das Rauchgas aufweist, das von dem Kältemittelkühler (180, 280) zugeführt wird und dem mehrstufigen Kältemittelkompressor (152, 252) zugeführt wird,
der Rauchgaskühler (160, 260) ein Expansionsventil umfasst, das geeignet ist, den Druck des kondensierten Kältemittels zu verringern sein und Verdampfen zu induzieren, und einen Wärmetauscher, wobei das Kältemittel geeignet ist, auf einen Druck P1 expandiert zu werden, und das siedende Kältemittel geeignet ist, zum indirekten Kühlen des Rauchgasstroms verwendet zu werden,
der erste Kondensator (164, 264) ein Expansionsventil umfasst, das geeignet ist, den Druck des kondensierten Kältemittels zu verringern und sein Verdampfen zu induzieren, und einen Wärmetauscher, wobei verflüssigtes Kältemittel geeignet ist, auf einen Druck P2 expandiert zu werden, der niedriger als P1 ist, und das siedende Kältemittel zum indirekten Kühlen des Rauchgasstroms verwendet wird,
der Kondensator (170, 270) ein Expansionsventil umfasst, das geeignet ist, den Druck des kondensierten Kältemittels zu verringern und sein Verdampfen zu induzieren, und einen Wärmetauscher, wobei verflüssigtes Kältemittel geeignet ist, auf einen Druck P3 expandiert zu werden, der niedriger als P2 ist, und das siedende Kältemittel zum indirekten Kühlen des Rauchgasstroms verwendet wird.

2. Rauchgasbehandlungssystem gemäß Anspruch 1, wobei das System ferner umfasst:
einen ersten Wärmetauscher (192), gestaltet zum Kühlen wenigstens eines Teils des kondensierten Kältemittels unter Verwendung des CO₂-abgereicherten Rauchgases aus der Strippersäule,
einen zweiten Wärmetauscher (193), gestaltet zum Wiedererhitzen des CO₂-abgereicherten Rauchgases aus dem Kältemittelkühler unter Verwendung von warmem Rauchgas aus dem Rauchgaskompressor,
einen ersten Rauchgasexpander (194), gestaltet zum Expandieren des wiedererhitzten komprimierten CO₂-abgereicherten Rauchgases aus dem ersten Wärmetauscher,
einen dritten Wärmetauscher (195), gestaltet zum weiteren Kühlen des kondensierten Kältemittels aus dem Kältemittelkühler unter Verwendung des CO₂-abgereicherten Rauchgases aus dem Rauchgasexpander,
einen vierten Wärmetauscher (196), gestaltet zum Wiedererhitzen des CO₂-abgereicherten Rauchgases aus dem zweiten Wärmetauscher unter Verwendung von warmem Rauchgas aus dem Rauchgaskompressor,
einen zweiten Rauchgasexpander (197), gestaltet zum Expandieren des wiedererhitzten komprimierten CO₂-abgereicherten Rauchgases aus dem zweiten Wärmetauscher, und
gegebenenfalls einen fünften Wärmetauscher (198), gestaltet zum Wiedererhitzen des CO₂-abgereicherten Rauchgases aus dem dritten Wärmetauscher.

3. Rauchgasbehandlungssystem gemäß Anspruch 1, wobei das System ferner umfasst:
einen ersten Wärmetauscher (192), gestaltet zum Kühlen wenigstens eines Teils des kondensierten Kältemittels unter Verwendung des CO₂-abgereicherten Rauchgases aus der Strippersäule,
einen zweiten Wärmetauscher (193), gestaltet zum Wiedererhitzen des CO₂-abgereicherten Rauchgases aus dem ersten Wärmetauscher unter Verwendung von warmem Rauchgas aus dem Rauchgaskompressor,
einen ersten Rauchgasexpander (194), gestaltet zum Expandieren des wiedererhitzten komprimierten CO₂-abgereicherten Rauchgases aus dem zweiten Wärmetauscher,
einen dritten Wärmetauscher (195), gestaltet zum weiteren Kühlen des kondensierten Kältemittels aus dem ersten Wärmetauscher unter Verwendung des CO₂-abgereicherten Rauchgases aus dem Rauchgasexpander,
einen zweiten Rauchgasexpander (197), gestaltet zum Expandieren des wiedererhitzten komprimierten CO₂-abgereicherten Rauchgases aus dem zweiten Wärmetauscher, und
einen vierten Wärmetauscher (196), gestaltet zum Wiedererhitzen des CO₂-abgereicherten Rauchgases aus dem dritten Wärmetauscher.

4. Rauchgasbehandlungssystem gemäß einem der Ansprüche 1 bis 3, wobei das System ferner umfasst:
eine selektive katalytische Reduktionseinheit (SCR) zum Entfernen von Stickoxiden (NOx) aus dem Rauchgasstrom, die dem Rauchgas-Adsorptionstrockner bezogen auf die allgemeine Flussrichtung des Rauchgasstroms nachgeschaltet angeordnet ist.

## Revendications

1. Système de traitement de gaz de combustion pour l'élimination de CO₂ d'un flux de gaz de combustion, comprenant
un compresseur de gaz de combustion (144, 244),
au moins un sécheur de gaz de combustion par adsorption (162, 262) en aval du compresseur de gaz de combustion (144, 244),
un système de réfrigération approprié pour la condensation de dioxyde de carbone (CO₂), dans un flux de gaz de combustion, ledit système comprenant un circuit de réfrigération (151, 251) contenant un fluide frigorigène,
ledit circuit de réfrigération comprenant :
un compresseur de fluide frigorigène à plusieurs étages (152, 252),
un condenseur de fluide frigorigène (153, 253) en aval du compresseur de fluide frigorigène à plusieurs étages (152, 252),
un refroidisseur de fluide frigorigène (180, 280) en aval du condenseur de fluide frigorigène (153, 253),
un refroidisseur de gaz de combustion (160, 260),
au moins un condenseur (170, 270) ayant un fluide de refroidissement pour le gaz de combustion qui est fourni à partir du refroidisseur de fluide frigorigène (180, 280) et qui est fourni au compresseur de fluide frigorigène à plusieurs étages (152, 252), l'au moins un condenseur (170, 270) étant en aval du sécheur de gaz de combustion par adsorption (162, 262),
et
une colonne d'extraction au gaz (171, 271) appropriée pour permettre la distillation alimentée avec le gaz de combustion refroidi par le refroidisseur de gaz de combustion (160, 260) et au moins un condenseur (170, 270) ; la colonne d'extraction au gaz (171, 271) ayant un rebouilleur (184, 284) approprié pour la vaporisation d'une partie du dioxyde de carbone pour produire le flux de gaz requis pour la colonne d'extraction au gaz (171, 271), la chaleur étant fournie au rebouilleur par le fluide frigorigène par refroidissement du fluide frigorigène dans le refroidisseur de fluide frigorigène par contact indirect avec le CO₂ liquide purifié froid provenant de la colonne d'extraction au gaz,
dans lequel le refroidisseur de gaz de combustion est disposé entre le compresseur de gaz de combustion et le sécheur de gaz de combustion par adsorption et le sécheur de gaz de combustion par adsorption et l'au moins un condenseur sont disposés en série en amont de la colonne d'extraction au gaz,
**caractérisé en ce que**
ledit système comprend un premier condenseur (164, 264) qui est disposé en série en amont du condenseur (170, 270) et en aval du sécheur de gaz de combustion par adsorption (162, 262), le premier condenseur (164, 264) étant alimenté en fluide frigorigène provenant du refroidisseur de fluide frigorigène (180, 280) et fournissant le fluide frigorigène au compresseur de fluide frigorigène à plusieurs étages (152, 252),
le refroidisseur de gaz de combustion (160, 260) a un fluide de refroidissement pour le gaz de combustion qui est fourni à partir du refroidisseur de fluide frigorigène (180, 280) et est fourni au compresseur de fluide frigorigène à plusieurs étages (152, 252),
le refroidisseur de gaz de combustion (160, 260) comprend une soupape de détente appropriée pour réduire la pression et provoquer l'évaporation du fluide frigorigène condensé et un échangeur de chaleur, le fluide frigorigène étant approprié pour être détendu à une pression P1 et le fluide frigorigène à l'ébullition étant approprié pour être utilisé pour refroidir indirectement le flux de gaz de combustion,
le premier condenseur (164, 264) comprend une soupape de détente, appropriée pour réduire la pression et provoquer l'évaporation du fluide frigorigène condensé et un échangeur de chaleur, le fluide frigorigène liquéfié étant approprié pour être détendu à une pression P2 inférieure à P1 et le fluide frigorigène à l'ébullition étant utilisé pour refroidir indirectement le flux de gaz de combustion,
le condenseur (170, 270) comprend une soupape de détente appropriée pour réduire la pression et provoquer l'évaporation du fluide frigorigène condensé et un échangeur de chaleur, le fluide frigorigène liquéfié étant approprié pour être détendu à une pression P3 inférieure à P2 et le fluide frigorigène à l'ébullition étant utilisé pour refroidir indirectement le flux de gaz de combustion.

2. Système de traitement de gaz de combustion selon la revendication 1, ledit système comprenant en outre
un premier échangeur de chaleur (192) conçu pour refroidir au moins une partie du fluide frigorigène condensé à l'aide du gaz de combustion appauvri en CO₂ provenant de la colonne d'extraction au gaz,
un deuxième échangeur de chaleur (193) conçu pour réchauffer le gaz de combustion appauvri en CO₂ provenant du refroidisseur de fluide frigorigène à l'aide du gaz de combustion chaud provenant du compresseur de gaz de combustion,
un premier détendeur de gaz de combustion (194) conçu pour détendre le gaz de combustion appauvri en CO₂ comprimé réchauffé provenant du premier échangeur de chaleur,
un troisième échangeur de chaleur (195) conçu pour refroidir encore le fluide frigorigène condensé provenant du refroidisseur de fluide frigorigène à l'aide du gaz de combustion appauvri en CO₂ provenant du détendeur de gaz de combustion,
un quatrième échangeur de chaleur (196) conçu pour réchauffer le gaz de combustion appauvri en CO₂ provenant du deuxième échangeur de chaleur à l'aide de gaz de combustion chaud provenant du compresseur de gaz de combustion,
un second détendeur de gaz de combustion (197) conçu pour détendre le gaz de combustion appauvri en CO₂ comprimé réchauffé provenant du deuxième échangeur de chaleur et
éventuellement, un cinquième échangeur de chaleur (198) conçu pour réchauffer le gaz de combustion appauvri en CO₂ provenant du troisième échangeur.

3. Système de traitement de gaz de combustion selon la revendication 1, ledit système comprenant en outre
un premier échangeur de chaleur (192) conçu pour refroidir au moins une partie du fluide frigorigène condensé à l'aide du gaz de combustion appauvri en CO₂ provenant de la colonne d'extraction au gaz,
un deuxième échangeur de chaleur (193) conçu pour réchauffer le gaz de combustion appauvri en CO₂ provenant du premier échangeur de chaleur à l'aide de gaz de combustion chaud provenant du compresseur de gaz de combustion,
un premier détendeur de gaz de combustion (194) conçu pour détendre le gaz de combustion appauvri en CO₂ comprimé réchauffé provenant du deuxième échangeur de chaleur,
un troisième échangeur de chaleur (195) conçu pour refroidir encore le fluide frigorigène condensé provenant du premier échangeur de chaleur à l'aide du gaz de combustion appauvri en CO₂ provenant du détendeur de gaz de combustion,
un second détendeur de gaz de combustion (197) conçu pour détendre le gaz de combustion appauvri en CO₂ comprimé réchauffé provenant du deuxième échangeur de chaleur et
un quatrième échangeur de chaleur (196) conçu pour réchauffer le gaz de combustion appauvri en CO₂ provenant du troisième échangeur.

4. Système de traitement de gaz de combustion selon l'une quelconque des revendications 1 à 3, ledit système comprenant en outre
une unité de réduction catalytique sélective (RCS) pour l'élimination d'oxydes d'azote (NOx) du flux de gaz de combustion, disposée en aval du sécheur de gaz de combustion par adsorption, par rapport à la direction de circulation générale du flux de gaz de combustion.
